# EUROPÄISCHE PATENTANMELDUNG

(11) **EP 1 978 687 A2**
(43) Veröffentlichungstag der Anmeldung: **08.10.2008**
(21) Anmeldenummer: 08000245.4
(22) Anmeldetag: 09.01.2008
(51) Int. Cl.: H04L 12/56, H04L 12/24, H04L 12/46

(54) **Verfahren zur Konfiguration des Redundanzprotokolls auf Geräten in einem redundanten Ringnetzwerk**

(30) Priorität: 05.04.2007 DE 102007016432
(71) Anmelder: Hirschmann Automation and Control GmbH, 72654 Neckartenzlingen (DE)
(72) Erfinder: Maisch, Werner, 72639 Neuffen (DE); Rentschler, Markus, 72581 Dettingen (DE)
(74) Vertreter: Thul, Hermann

(57) **Zusammenfassung**

Ringnetzwerk (1, 10) mit Geräten (2 bis 8), die über Linien (B) miteinander verbunden sind, wobei jedes Gerät (2 bis 8) zumindest zwei Schnittstellen (21, 22, 31, 32, 41, 42, 51, 52, 61, 62, 71, 72, 81, 82) aufweist, an dem die Linien (B) angeschlossen sind, wobei erfindungsgemäß vorgesehen ist, dass zumindest ein Gerät (2, 8) derart als Ringmanager ausgebildet ist, dass ausgehend von diesem Ringmanager die anderen Geräte (3, 4, 5, 6, 7) über die Linien (B) konfiguriert werden.

## Beschreibung

Die Erfindung betrifft ein Verfahren zur Konfiguration des Redundanzprotokolls auf Geräten in einem Ringnetzwerk und ein dementsprechend ausgebildetes Ringnetzwerk gemäss den Merkmalen des jeweiligen Oberbegriffes der unabhängigen Patentansprüche 1 und 6.

Aus der EP 1 062 787 B1 ist ein lokales Netzwerk, insbesondere ein Ethernet-Netzwerk, bekannt, das als Ringnetzwerk ausgebildet ist. In diesem Ringnetzwerk sind Geräte angeordnet, die über Linien (Verbindungsleitungen) miteinander verbunden sind, wobei jedes Gerät zumindest zwei Schnittstellen aufweist, an denen die Linien angeschlossen sind.

Die Geräte, die als Layer-Zwei ausgeführt sind, können zum Beispiel Vermittlungssysteme (Ethernet-Switches), Automatisierungssysteme, Bedien- und/oder Beobachtungsstationen, Server, Drucker, weitere Netze und dergleichen sein. Diese Geräte sind vor allen Dingen beim Einsatz in der Automatisierungstechnik in vorgegebenen Abständen, die oftmals sehr groß (auch mehrere Kilometer) sein können, angeordnet.

Bei der Neueinrichtung stellt sich, genauso wie bei späteren Anpassungen, das Problem, dass eine Konfiguration der Geräte, die im Ringnetzwerk angeordnet sind, erforderlich ist. Bei einer solchen Konfiguration kann es sich um eine Erstkonfiguration handeln, genauso aber auch um ein Update eines einmal schon konfigurierten Gerätes. Bei bekannten Verfahren zur Konfiguration von Geräten im Ringnetzwerk ist es daher erforderlich, dass ein Servicetechniker sich an jedes Gerät begibt und dieses an Ort und Stelle konfiguriert, wozu er zum Beispiel ein Laptop an das Gerät anschließt und eine Konfigurations-Software ausführen läßt. Aufgrund der räumlichen Distanz der verschiedenen Geräte innerhalb des Ringnetzwerkes ist ein solches Konfigurationsverfahren aber nicht in der gewünschten Schnelligkeit auszuführen, sondern mit erheblichem Zeit- und Fahrtaufwand verbunden.

Der Erfindung liegt daher die Aufgabe zugrunde, die eingangs geschilderten Nachteile zu vermeiden. Mit einem Verfahren zur Konfiguration von Geräten in einem Ringnetzwerk und einem dementsprechend ausgebildeten Ringnetzwerk soll vor allen Dingen die Zeit für eine Konfiguration des Redundanzprotokolls auf Geräten in dem Ringnetzwerk verkürzt werden.

Diese Aufgabe ist durch die Merkmale der unabhängigen Patentansprüche 1 und 6 gelöst.

Bei dem erfindungsgemäßen Ringnetzwerk ist vorgesehen, dass zumindest ein Gerät derart als Ringmanager ausgebildet ist, dass ausgehend von diesem Ringmanager die anderen Geräte über die Linien konfiguriert werden.

Bei dem erfindungsgemäßen Verfahren zur Konfiguration des Redundanzprotokolls der Geräte ist vorgesehen, dass ausgehend von einem Gerät, das als Ringmanager eingesetzt wird, sich das Redundanzprotokoll der übrigen Geräte über die Linien mittels Datenpaketen, die Konfigurationsdaten enthalten, selbsttätig konfiguriert, wobei die Datenpakete von dem Ringmanager über die Linien ausgesendet werden.

Das Verfahren zur Konfiguration des Redundanzprotokoll der Geräte und das entsprechend gestaltete Ringnetzwerk haben somit den Vorteil, dass die Konfiguration des Redundanzprotokolls von Geräten, die sich in dem Ringnetzwerk befinden, zentral von einer Stelle ausgeführt werden kann, ohne dass ein Servicetechniker vor Ort an jedem einzelnen Gerät die Konfiguration vornehmen müßte. Dadurch läßt sich ein solches Ringnetzwerk wesentlich schneller konfigurieren. Ausgehend von einem Netzwerkknoten (dem Ringmanager) wird somit in einer angeschlossenen Topologie des Ringnetzwerkes ein physikalisch vorhandener geschlossenener ringförmiger Pfad selbsttätig detektiert. Hierzu sendet der kontrollierende Ringmanager an den Schnittstellen (Ports), über welche die zu betrachtende Topologie angeschlossen ist, Datenpakete, die die Konfigurationsdaten enthalten, aus, die von den angeschlossenen untergeordneten Geräten (wie Ringklienten, weitere Netzwerkknoten und dergleichen) an allen ihren Ports weitergeleitet werden. Die Empfangsports dieser Pakete werden von den beteiligten Ringklienten als Ringports markiert. Diejenigen Klienten, die die Datenpakete mit den Konfigurationsdaten eines Ringmanagers an zwei Ports empfangen haben, befinden sich damit direkt in der Topologie eines Rings (einer Masche) des Ringnetzwerkes und leiten die empfangenen Pakete des Ringprotokolls nur noch in die jeweils andere Richtung über ihren anderen Ringport weiter. Damit werden zur automatischen und selbsttätigen Konfiguration, ausgehend von dem Ringmanager, die beteiligten Geräte in dem Ringnetzwerk herangezogen. Die Ports der Geräte in dem Ringnetzwerk müssen aufgrund des erfindungsgemäßen Verfahrens nicht mehr aufwändig manuell konfiguriert werden, sondern können sich selbsttätig konfigurieren. Dadurch werden beträchtliche Vorteile, vor allen Dingen in Hinsicht von Aufwandsreduktion, bei der Konfiguration einer Ringtopologie erzielt.

Durch die Verwaltung der Information auf den Geräten je Ringport und Ringmanager ist das Verfahren auch zur Konfiguration multipler vermaschter Ringe geeignet. Vorraussetzung hierfür ist, dass sich in jeder Masche ein eindeutiger Ringmanager befindet. Ein Ringmanager kann bestimmungsgemäß multiple Ringstrukturen verwalten.

Solange ein detektierter Ring geschlossen ist und die Datenpakete mit den Konfigurationsdaten aus beiden Richtungen empfangen werden, blockiert der Ringmanager zumindest einen seiner Ringports für den normalen Datenverkehr. Bleibt der Empfang von Konfigurationsdaten aus, öffnet er selbsttätig auch den bis dahin geschlossenen Port für den Datenverkehr.

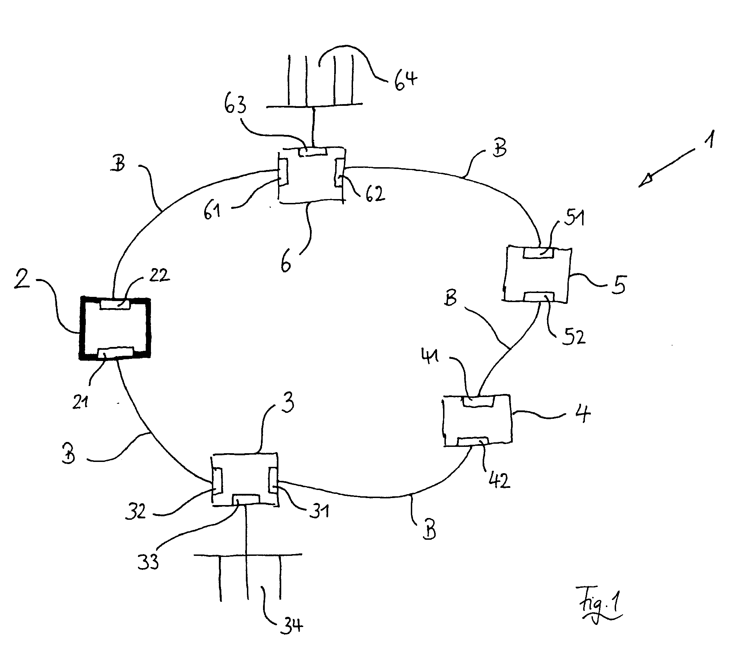

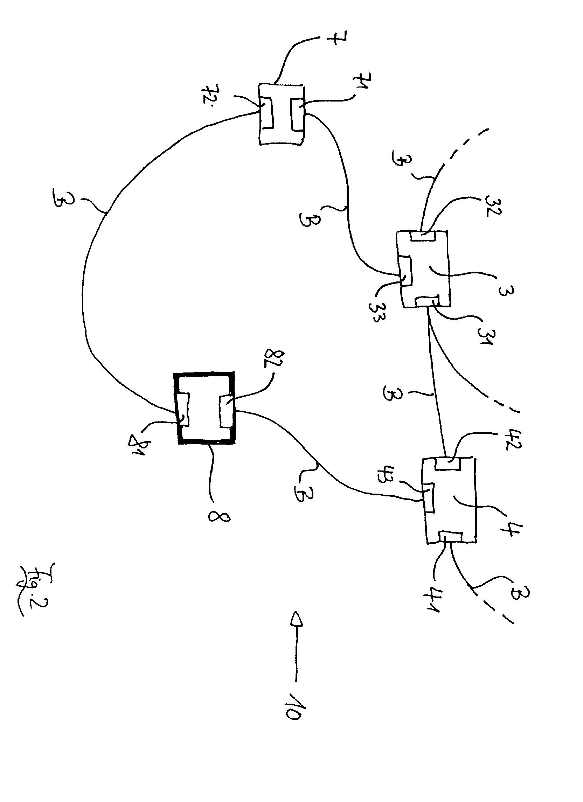

Ergänzend zu der vorstehenden Beschreibung wird das erfindungsgemäße Verfahren zur Konfiguration von Geräten in einem Ringnetzwerk anhand der folgenden Beschreibung unter Zuhilfenahme der Figuren 1 und 2 erläutert.

Figur 1 zeigt ein Ringnetzwerk, bestehend aus nur einem Ring (= einer Masche). In dem Ringnetzwerk 1 sind mehrere Geräte 2 bis 6 angeordnet und über Linien B miteinander verbunden. Die einzelnen Geräte 2 bis 6 weisen zumindest zwei Schnittstellen (Ports) auf, die je nach Gerät mit den Bezugsziffern 21, 22, 31, 32, 33, 41, 42, 43, 51, 52, 61, 62, 63 versehen sind. Das bedeutet, dass ein Gerät entweder zwei Ports hat und damit nur in diesem einen Ring des Ringnetzwerkes angeordnet ist oder mehr als zwei Schnittstellen aufweist, wobei an der zumindest weiteren Schnittstelle (beispielsweise 33, 63) weiterführende Netzwerke 34, 64 angeschlossen sein können, aber nicht müssen.

In diesem Ringnetzwerk 1 ist eines der Geräte, beispielsweise das Gerät 2, als Ringmanager ausgebildet. Das bedeutet, dass, nachdem das Ringnetzwerk 1 aufgebaut worden ist, eine Bedienperson (wie beispielsweise ein Servicetechniker, Systemadministrator oder dergleichen) dieses Gerät als Ringmanager auswählt und von dort das Redundanzprotokoll der übrigen im Ringnetzwerk 1 angeordneten Geräte 3 bis 6 konfiguriert oder durch einen Protokollautomatismus selbsttätig konfigurieren lässt, ohne in räumlicher Nachbarschaft zu diesen Geräten zu sein.

Von diesem Ringmanager 2 ausgehend ist es also möglich, das Redundanzprotokoll sämtlicher Geräte 3 bis 6 (oder auch mehr) in dem Ringnetzwerk 1 von zentraler Stelle aus zu konfigurieren, ohne an diese übrigen Geräte 3 bis 6 herantreten zu müssen. Dies hat vor allen Dingen Vorteile in großen Automatisierungsnetzwerken, bei denen die einzelnen Geräte 3 bis 6 oftmals über große Distanzen hinweg in dem Ringnetzwerk 1 angeordnet sind.

Während in Figur 1 dargestellt ist, dass das Ringnetzwerk 1 ein einmaschiges Ringnetzwerk ist, so ist in Figur 2 ein Ringnetzwerk 10 dargestellt, welches über mehr als eine Masche verfügt. Der Einfachheit halber ist eine zweite Masche dargestellt, wobei das Verfahren zur Konfiguration auch bei Ringnetzwerken einsetzbar ist, die mehr als zwei Maschen (Ringe) aufweisen.

Beispielhaft sind an den Schnittstellen 33, 43 der Geräte 3, 4 weitere Linien angeschlossen, die die Geräte 3, 4 mit weiteren Geräten 7, 8 verbinden. Auch diese Geräte 7, 8 haben jeweils zumindest zwei Schnittstellen 71, 72 beziehungsweise 81, 82. Genauso wie in dem einmaschigen Ringnetzwerk 1 gemäss Figur 1 ist zusätzlich zu dem Ringmanager 2 (Figur 1) bei dem mehrmaschigen Ringnetzwerk 10 gemäss Figur 2 eines der Geräte, nämlich das Gerät 8, als Ringmanager ausgebildet.

Ein besonders wesentlicher Punkt für die Erfindung ist schließlich noch darin zu sehen, dass die beteiligten Geräte (beispielsweise mit den Bezugsziffern 2 bis 6 bei einem einfachen Ringnetzwerk oder 2 bis 8 bei einem vermaschten Ringnetzwerk) bei Automatisierungsnetzwerken über große Distanzen hinweg, die auch mehrere Kilometer oder noch mehr betragen können, eingesetzt werden. Damit bietet das erfindungsgemäße Verfahren eine Konfiguration des Redundanzprotokolls der Geräte innerhalb des Ringnetzwerkes zentral von einer Stelle aus, nämlich dem Ringmanager. Damit ist es nicht mehr erforderlich, dass diejenige Person, die die Geräte konfigurieren soll, physisch an jedem Gerät in Erscheinung tritt, um dort eine Konfiguration vorzunehmen.

### Bezugszeichenliste

- 1, 10: Ringnetzwerk

- 2 - 8: Geräte

- 21,22:
- 31,32,33:
- 41,42,43:
- 51, 52: Schnittstellen (Ports)
- 61,62,63:
- 71,72:
- 81,82:

- 34, 64: weiterführende Netzwerke

## Patentansprüche

1. Ringnetzwerk (1, 10) mit Geräten (2 bis 8), die über Linien (B) miteinander verbunden sind, wobei jedes Gerät (2 bis 8) zumindest zwei Schnittstellen (21, 22, 31, 32, 41, 42, 51, 52, 61, 62, 71, 72, 81, 82) aufweist, an dem die Linien (B) angeschlossen sind, **dadurch gekennzeichnet, dass** zumindest ein Gerät (2, 8) derart als Ringmanager ausgebildet ist, dass ausgehend von diesem Ringmanager die anderen Geräte (3, 4, 5, 6, 7) über die Linien (B) konfiguriert werden.

2. Ringnetzwerk (1, 10) nach Anspruch 1, **dadurch gekennzeichnet, dass** der Ringmanager zur Aussendung von Datenpaketen über die Linien (B) ausgebildet ist, wobei durch die Datenpakete die Schnittstellen (21, 22, 31, 32, 41, 42, 51, 52, 61, 62, 71, 72, 81, 82) der Geräte (3, 4, 5, 6, 7) konfigurierbar sind.

3. Ringnetzwerk (1, 10) nach Anspruch 1 oder 2, **dadurch gekennzeichnet, dass** im jeweiligen Ringnetzwerk nur ein Ringmanager eingesetzt ist.

4. Ringnetzwerk (1, 10) nach einem der vorhergehenden Patentansprüche, **dadurch gekennzeichnet, dass** bei vermaschten Ringnetzwerken der jeweilige Ringmanager in der Lage ist, die ihm zugehörige Masche unbeeinflusst von den anderen Ringmanagern zu verwalten.

5. Ringnetzwerk (1, 10) nach einem der vorhergehenden Patentansprüche, **dadurch gekennzeichnet, dass** zumindest eines der Geräte (2 bis 8) als Redundanzmanager ausgebildet ist.

6. Verfahren zur Konfiguration von Geräten (2 bis 8) in einem Ringnetzwerk (1, 10), wobei die Geräte (2 bis 8) über Linien (B) miteinander verbunden sind, wobei jedes Gerät (2 bis 8) zumindest zwei Schnittstellen (21, 22, 31, 32, 41, 42, 51, 52, 61, 62, 71, 72, 81, 82) aufweist, an dem die Linien (B) angeschlossen sind, **dadurch gekennzeichnet, dass** ausgehend von einem Gerät (2, 8), das als Ringmanager eingesetzt wird, das Redundanzprotokoll der übrigen Geräte (3 bis 7) über die Linien (B) mittels Datenpaketen, die Konfigurationsdaten enthalten, konfiguriert wird, wobei die Datenpakete von dem Ringmanager über die Linien (B) ausgesendet werden.

7. Verfahren nach Anspruch 6, **dadurch gekennzeichnet, dass** ein Gerät, welches ein Datenpaket mit den Konfigurationsdaten an seiner einen Schnittstelle erhalten hat, das Datenpaket über seine zumindest eine weitere Schnittstelle an das zumindest eine dort angeschlossene Gerät oder das dort angeschlossene weiterführende Netzwerk weiterleitet.

8. Verfahren nach Anspruch 6 oder 7, **dadurch gekennzeichnet, dass** der normale Datenverkehr über die redundante Linie (B) zwischen den Geräten (2 bis 8) solange blockiert ist, bis die Konfiguration abgeschlossen ist.
